# EUROPEAN PATENT SPECIFICATION

(11) **EP 2 947 806 B1**
(45) Date of publication and mention of the grant of the patent: **29.08.2018**
(21) Application number: 15168253.1
(22) Date of filing: 19.05.2015
(51) Int. Cl.: H04L 5/00

(54) **DATA TRANSMISSION/RECEPTION METHOD AND APPARATUS OF LOW-COST TERMINAL IN MOBILE COMMUNICATION SYSTEM**
DATENÜBERTRAGUNGS-/-EMPFANGSVERFAHREN UND -VORRICHTUNG EINES KOSTENGÜNSTIGEN ENDGERÄTS IN MOBILKOMMUNIKATIONSSYSTEM
PROCÉDÉ DE TRANSMISSION/RÉCEPTION DE DONNÉES ET APPAREIL TERMINAL À FAIBLE COÛT DANS UN SYSTÈME DE COMMUNICATION MOBILE

(30) Priority: 23.05.2014 KR 20140062336
(43) Date of publication of application: 25.11.2015
(73) Proprietor: Samsung Electronics Co., Ltd., Suwon-si, Gyeonggi-do (KR)
(72) Inventor: Kim, Youngbum, 443-742 Gyeonggi-do (KR); Choi, Seunghoon, 443-742 Gyeonggi-do (KR)
(74) Representative: Nederlandsch Octrooibureau

(56) References cited:
- US-A1- 2008 232 301
- US-A1- 2010 182 951
- ERICSSON: "Remaining details of low cost MTC UE", 3GPP DRAFT; R1-135643 REMAINING DETAILS OF LOW COST MTC UE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. San Francisco, CA, USA; 20131111 - 20131115 13 November 2013 (2013-11-13), XP050735300, Retrieved from the Internet: URL:http://www.3gpp.org/ftp/Meetings_3GPP_ SYNC/RAN/RAN1/Docs/ [retrieved on 2013-11-13]
- INTEL CORPORATION: "Discussion on open aspects for low cost MTC UEs", 3GPP DRAFT; R2-141228, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Valencia, Spain; 20140331 - 20140404 21 March 2014 (2014-03-21), XP050817647, Retrieved from the Internet: URL:http://www.3gpp.org/ftp/tsg_ran/WG2_RL 2/TSGR2_85bis/Docs/ [retrieved on 2014-03-21]
- SAMSUNG: "Remaining issues of low cost MTC", 3GPP DRAFT; R1-141278-LOW-COST-MTC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Shenzhen, China; 20140331 - 20140404 30 March 2014 (2014-03-30), XP050786950, Retrieved from the Internet: URL:http://www.3gpp.org/ftp/Meetings_3GPP_ SYNC/RAN1/Docs/ [retrieved on 2014-03-30]

## Description

### BACKGROUND OF THE INVENTION

### 1. Field of the Invention

The present invention relates generally to a cellular mobile communication system and, more particularly, to a data transmission/reception method of a low-cost terminal for use in the cellular mobile communication system.

### 2. Description of the Related Art

To meet the demand for wireless data traffic having increased since deployment of 4G communication systems, efforts have been made to develop an improved 5G or pre-5G communication system. Therefore, the 5G or pre-5G communication system is also called a 'Beyond 4G Network' or a 'Post LTE System'. The 5G communication system is considered to be implemented in higher frequency (mmWave) bands, e.g., 60GHz bands, so as to accomplish higher data rates. To decrease propagation loss of the radio waves and increase the transmission distance, the beamforming, massive multiple-input multiple-output (MIMO), Full Dimensional MIMO (FD-MIMO), array antenna, an analog beam forming, large scale antenna techniques are discussed in 5G communication systems. In addition, in 5G communication systems, development for system network improvement is under way based on advanced small cells, cloud Radio Access Networks (RANs), ultra-dense networks, device-to-device (D2D) communication, wireless backhaul, moving network, cooperative communication, Coordinated Multi-Points (CoMP), reception-end interference cancellation and the like. In the 5G system, Hybrid FSK and QAM Modulation (FQAM) and sliding window superposition coding (SWSC) as an advanced coding modulation (ACM), and filter bank multi carrier (FBMC), non-orthogonal multiple access(NOMA), and sparse code multiple access (SCMA) as an advanced access technology have been developed.

The Internet, which is a human centered connectivity network where humans generate and consume information, is now evolving to the Internet of Things (IoT) where distributed entities, such as things, exchange and process information without human intervention. The Internet of Everything (IoE), which is a combination of the IoT technology and the Big Data processing technology through connection with a cloud server, has emerged. As technology elements, such as "sensing technology", "wired/wireless communication and network infrastructure", "service interface technology", and "Security technology" have been demanded for IoT implementation, a sensor network, a Machine-to-Machine (M2M) communication, Machine Type Communication (MTC), and so forth have been recently researched. Such an IoT environment may provide intelligent Internet technology services that create a new value to human life by collecting and analyzing data generated among connected things. IoT may be applied to a variety of fields including smart home, smart building, smart city, smart car or connected cars, smart grid, health care, smart appliances and advanced medical services through convergence and combination between existing Information Technology (IT) and various industrial applications.

In line with this, various attempts have been made to apply 5G communication systems to IoT networks. For example, technologies such as a sensor network, Machine Type Communication (MTC), and Machine-to-Machine (M2M) communication may be implemented by beamforming, MIMO, and array antennas. Application of a cloud Radio Access Network (RAN) as the above-described Big Data processing technology may also be considered to be as an example of convergence between the 5G technology and the IoT technology.

The mobile communication system has evolved into a high-speed, high-quality wireless packet data communication system capable of providing data and multimedia services beyond the early voice-oriented services. Various mobile communication standards (such as, for example, high speed packet access (HSPA), long term evolution (LTE) of the 3^{rd} Generation Partnership Project (3GPP), high rate packet data (HRPD) of 3GPP2, ultra mobile broadband (UMB), and 802.16e of Institute of Electrical and Electronics Engineers (IEEE)) have been developed to support the high-speed, high-quality wireless packet data communication services.

As one of the representative broadband radio communication systems, the LTE system uses orthogonal frequency division multiplexing (OFDM) in the downlink and single carrier-frequency division multiple access (SC-FDMA) in the uplink. Such a multiple access scheme is characterized in that the time-frequency resources are allocated to carry user-specific data and control information without overlapping, i.e., maintaining orthogonality, so as to distinguish user-specific data and control information.

The LTE system also adopts hybrid automatic repeat request (HARQ) for retransmitting the decoding-failed data, which is transmitted initially on the physical layer. The HARQ scheme is a technique in which, when received data is not decoded correctly, the receiver transmits a negative acknowledgement (NACK) informing the transmitter of the decoding failure. Thus, the transmitter retransmits the corresponding data on the physical layer. When the data is decoded correctly, the receiver transmits an acknowledgement (ACK) to the transmitter, and thus, the transmitter transmits new data.

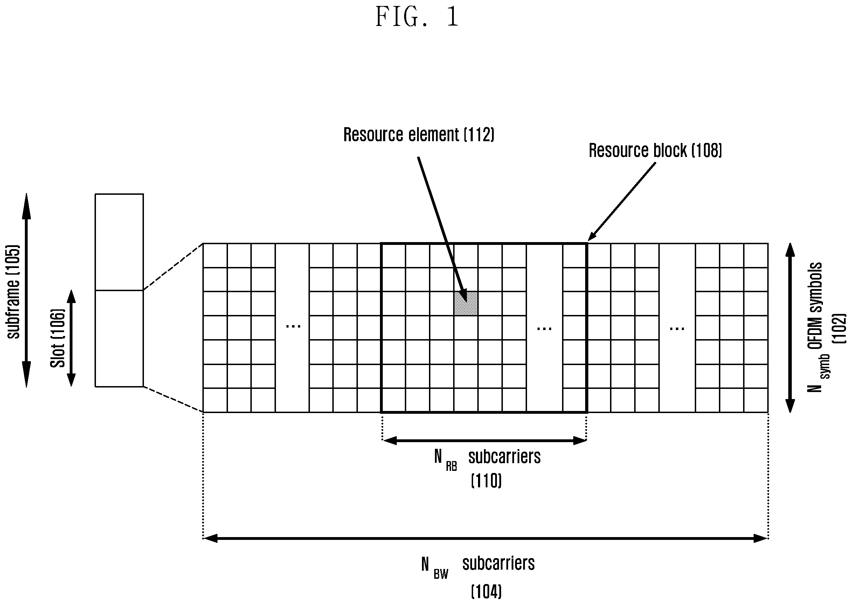

FIG. 1 is a diagram illustrating a basic structure of time-frequency resource grid for transmitting data and/or control channels in downlink of the LTE system.

In FIG. 1, the horizontal axis denotes time, and the vertical axis denotes frequency. The smallest transmission unit in the time domain is an OFDM symbol, and N_{symb} OFDM symbols 102 form a slot 106. Two slots 106 form a subframe 105, and 10 subframes 105 form a radio frame. A slot 106 spans 0.5ms, a subframe 105 spans 1.0ms, and a radio frame spans 10ms. The smallest transmission unit in the frequency domain is a subcarrier.

In the time-frequency domain, the basic resource unit is a resource element (RE) 112, and each RE is defined by one SC-FDMA symbol index and one subcarrier index. A resource block (RB) or physical resource block (PRB) 108 is defined by N_{symb} consecutive SC-FDMA symbols in the time domain and N^{RB}_{SC} consecutive subcarriers in the frequency domain. Thus, one RB 108 consists of N_{symb} x N_{RB} REs 112. Typically, the smallest data transmission unit is the RB 108. In the LTE system, N_{symb} = 7 and N^{RB}_{SC} =12 in general, and N_{BW} and N_{RB} are in proportion to the system transmission band. The data rate increases in proportion to the number of RBs 108 scheduled to the terminal.

The control information is carried in N OFDM symbols at the beginning of the subframe. Typically, N={1, 2, 3}. Accordingly N may change in every subframe depending on the amount of control information that is to be transmitted in the corresponding subframe. The control information may include a control channel transmission duration indicator, downlink or uplink data scheduling information, and HARQ ACK/NACK.

In the LTE system, the base station sends, to the terminal, the downlink or uplink data scheduling information using downlink control information (DCI). The UL is a radio link for the terminal to transmit data or a control signal to the base station, and the DL is a radio link for the base station to transmit data or a control signal to the terminal. The DCI is generated in different DCI formats according to whether scheduling information is for UL or DL, whether the DCI is a compact DCI, whether spatial multiplexing with multiple antennas is applied, and whether the DCI is the power control DCI. For example, the DCI format 1 for the control information about DL data (DL grant) is configured to include the control information below:
- Resource allocation type 0/1 flag: notifies the terminal of whether the resource allocation type is type 0 or type 1. Type 0 indicates resource allocation in units of RB groups (RBGs) in a bitmap method. In LTE and LTE-A systems, the basic scheduling unit is an RB representing a time and frequency resource, and an RBG is composed of a plurality of RBs and a basic scheduling unit in type 0. Type 1 indicates allocation of a specific RB in an RBG.
- Resource block assignment: notifies the terminal of an RB allocated for data transmission. The resource expressed according to the system bandwidth and resource allocation scheme is determined.
- Modulation and coding scheme: notifies the terminal of a modulation scheme and coding rate applied for data transmission.
- HARQ process number: notifies the terminal of a HARQ process number.
- New data indicator: notifies the terminal of whether the transmission is a HARQ initial transmission or retransmission.
- Redundancy version: notifies the terminal of a redundancy version of HARQ.
- TPC command for PUCCH: notifies the terminal of a power control command for a physical uplink control channel (PUCCH) as an uplink control channel.

The DCI is channel-coded and modulated and then transmitted through a physical downlink control channel (PDCCH) or an enhanced-PDCCH (E-PDCCH).

Typically, the DCI is channel-coded per terminal and then transmitted on a terminal-specific PDCCH. The PDCCH is mapped to the control channel region in the time domain. The mapping position of the PDCCH in the frequency domain is determined by the terminal identifier (ID) and spread over the entire system transmission band.

The downlink data is transmitted on a physical downlink shared channel (PDSCH). The PDSCH follows the control channel region, and its scheduling information, such as its mapping position in the frequency domain and modulation scheme, is informed with the DCI transmitted on the PDCCH.

The base station notifies the terminal of the modulation scheme applied to the PDSCH and transport block size (TBS) using the modulation and coding scheme (MCS), which occupies 5 bits of the control information forming the DCI. The TBS is the size of the data before channel coding for error correction is performed on the transport block (TB)

The LTE system supports modulation schemes including quadrature phase shift keying (QPSK), 16-QAM, and 64-QAM, having modulation orders (Qₘ) of 2, 4, and 6, respectively. That is, a QPSK modulation symbol carries 2 bits of information, a 16-QAM modulation symbol carries 4 bits of information, and a 64-QAM modulation symbol carries 6 bits of information.

The LTE system may be configured to support low-cost terminals with restricted functionality. For example, it is possible to reduce the radio frequency (RF) cost of the terminal by restricting the number of receiving antennas of the terminal to 1, and to reduce the receiving buffer cost of the terminal by restricting the maximum value of TBS, which the low-cost terminal can process. It is expected that the low-cost terminal is suitable for MTC or M2M service, such as, for example, remote metering, anti-crime measures, and logistics services.

### SUMMARY OF THE INVENTION

The present invention has been made to address at least the above problems and/or disadvantages and to provide at least the advantages described below. Accordingly, an aspect of the present invention provides a data transmission/reception method and apparatus of a low-cost terminal.

The invention is defined by the subject-matter of the independent claims 1, 5, 9 and 11. Further preferred embodiments are defined in the dependent claims.

### BRIEF DESCRIPTION OF THE DRAWINGS

The above and other aspects, features, and advantages of the present invention will be more apparent from the following detailed description when taken in conjunction with the accompanying drawings, in which:
FIG. 1 is a diagram illustrating a basic structure of time-frequency resource grid for transmitting data and/or control channels in downlink of the LTE system;
FIG. 2 is a flowchart illustrating a downlink data TBS determination procedure of the UE in the LTE system, according to an embodiment of the present invention;
FIG. 3 is a flowchart illustrating a procedure following the TBS determination at the low-cost terminal, according to an embodiment of the present invention;
FIG. 4 is a flowchart illustrating a procedure following the TBS determination at the low-cost terminal, according to another embodiment of the present invention;
FIG. 5 is a conceptual diagram illustrating the scheduling determination operation of the eNB, according to an embodiment of the present invention; and
FIG. 6 is a block diagram illustrating a configuration of the receiver of the UE, according to an embodiment of the present invention.

### DETAILED DESCRIPTION OF EMBODIMENTS OF THE PRESENT INVENTION

Embodiments of the present invention are described in detail with reference to the accompanying drawings. The same or similar components may be designated by the same or similar reference numerals although they are illustrated in different drawings. Detailed descriptions of constructions or processes known in the art may be omitted to avoid obscuring the subject matter of the present invention.

The terms described herein are defined in consideration of the functionality of embodiments of the present invention, and may vary according to the intention of a user or an operator, usage, etc. Therefore, the definition should be determined based on the overall content described herein.

The terms used herein are provided to assist in understanding the present invention and may be modified into different forms without departing from the spirit of the present invention.

Although the description is directed to an OFDM-based radio communication system, particularly the 3GPP evolved universal mobile telecommunications system (UMTS) terrestrial radio access (EUTRA), it will be understood by those skilled in the art that the embodiments of the present invention can be even to other communication systems having a similar technical background and channel format, with slight modification, without departing from the spirit and scope of the present invention.

In the following description, the base station, as a resource allocator, can be embodied as any of a Node B, an evolved Node B (eNB), a radio access unit, a base station controller, and a node on the network. In the following description, the terminal may be embodied as any of a user equipment (UE), a mobile station (MS), a cellular phone, a smartphone, a computer, and a multimedia system having a communication function. In the following description, DL denotes a radio channel for signal transmission from a base station to a terminal, and UL denotes a radio channel for signal transmission from a terminal to a base station.

In the following description, a low-cost terminal refers to a terminal operating with low cost by restricting LTE terminal functionality. The low-cost terminal may be interchangeablely referred to as a low-cost device, a low-cost UE, and a low-cost MS.

As described above, the low-cost UE, which is restricted in functionality as compared to the legacy LTE UE, is capable of reducing the receiving data buffer cost by defining the limit of TBS (TBS_limit) that the low-cost UE can process. By taking notice of low data rate services (such as, for example, remote metering, anti-crime measures, and logistics services), there is no significant problem in limiting the TBS of the low-cost UE as compared to the legacy UE. For example, TBS_limit can be set to1000 bits.

In order to check the TBS of the downlink data transmitted by the eNB, the UE refers to the resource block allocation information and MCS included in the DCI as scheduling control information about the downlink data. The UE acquires the information on the number of PRBs (N_PRB), to which downlink data is mapped, from the resource block allocation information and the TBS information (I TBS) from the MCS information (IMCS). Table 1, as set forth below, is the modulation and TBS index table defined in the LTE standard. Referring to Table 1, if I_MCS=10 is acquired as the MCS information included in the DCI received from the eNB, the UE references Table to determine that I_TBS=9.

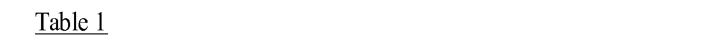

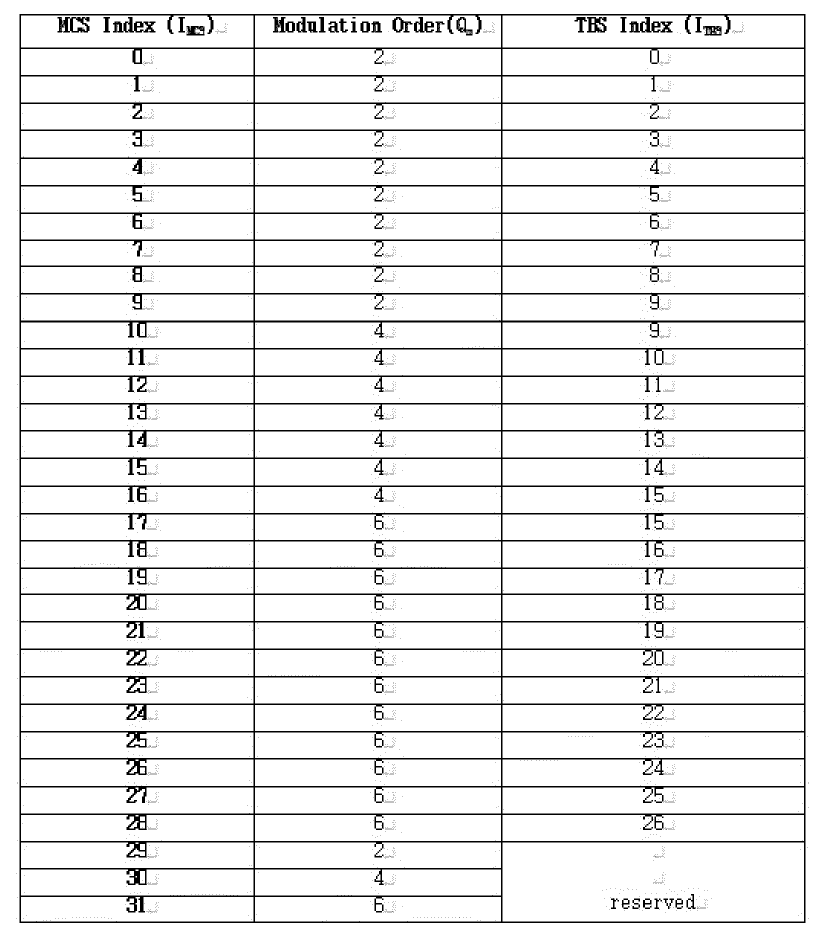

The UE is capable of checking the TBS of the downlink data transmitted by the eNB based on the I_TBS and N_PRB.

Table 2 shows a part of the TBS table defined in the LTE standard. Assuming that the eNB sends the UE the resource block allocation information of N_PRB = 10 and MCS of I_MCS=10 in the DCI, the UE refers to Table 1 to determine that I_TBS=9 and refers to Table 2 to determine that TBS=1544. However, if the TBS_limit of the low-cost UE is set to 1000 bits, it cannot process downlink data that exceeds its TBS_limit, and thus, the eNB cannot successfully transmit the downlink data with TBS=1544 bits. If the eNB has the capability to identify the newly defined low-cost UE, it can schedule the low-cost UE by taking notice of the TBS_limit so as to guarantee downlink data processing of the low-cost UE. However, if the eNB does not have the capability to identify the newly defined low-cost UE, it transmits downlink data to the low-cost UE without notice of the TBS_limit, as it does to the legacy UE, resulting in a transmission failure. More particularly, when a network operator plans to popularize the use of the low-cost UEs without modification of the legacy eNBs, such a problem is of significant concern.

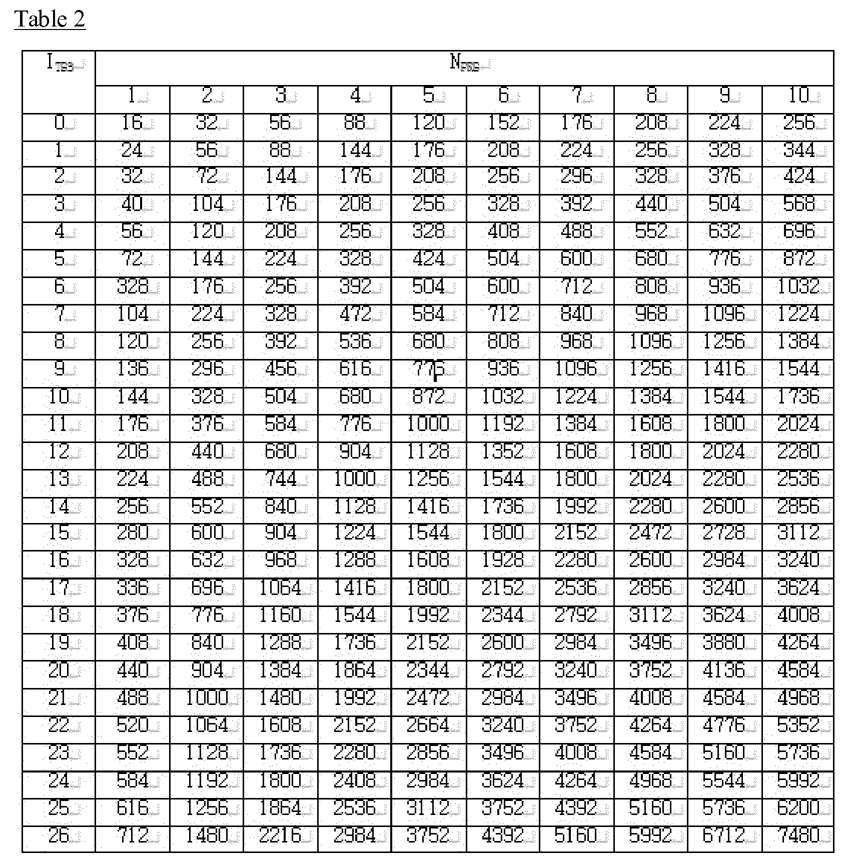

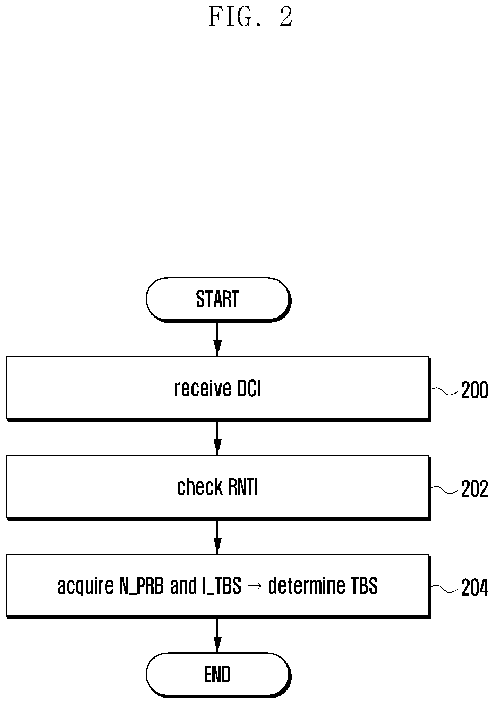

FIG. 2 is a flowchart illustrating a downlink data TBS determination procedure of the UE in the LTE system, according to an embodiment of the present invention.

Referring to FIG. 2, the UE receives DCI from the eNB through PDCCH or E-PDCCH, in step 200. The UE checks the radio network temporary identifier (RNTI) to determine the type of the downlink data from the DCI, in step 202. The RNTI can be classified into one of a paging-RNTI (P-RNTI), a system information-RNTI (SI-RNTI), and a random access-RNTI (RA-RNTI), when the DL carries common control information such as, for example, paging, system information, and random access, and can be classified as cell-RNTI (C-RNTI), which is valid for a predetermined UE. The TBS table may be defined differently depending on whether the DL carries the common control information or not. Since the common control information can be used without distinction between the legacy LTE UE and the low-cost UE, it is preferred to not apply TBS_limit. Steps 200 and 202 may be performed simultaneously. The UE determines the TBS of the scheduled downlink data based on the N_PRB and I TBS acquired from the DCI, in step 204.

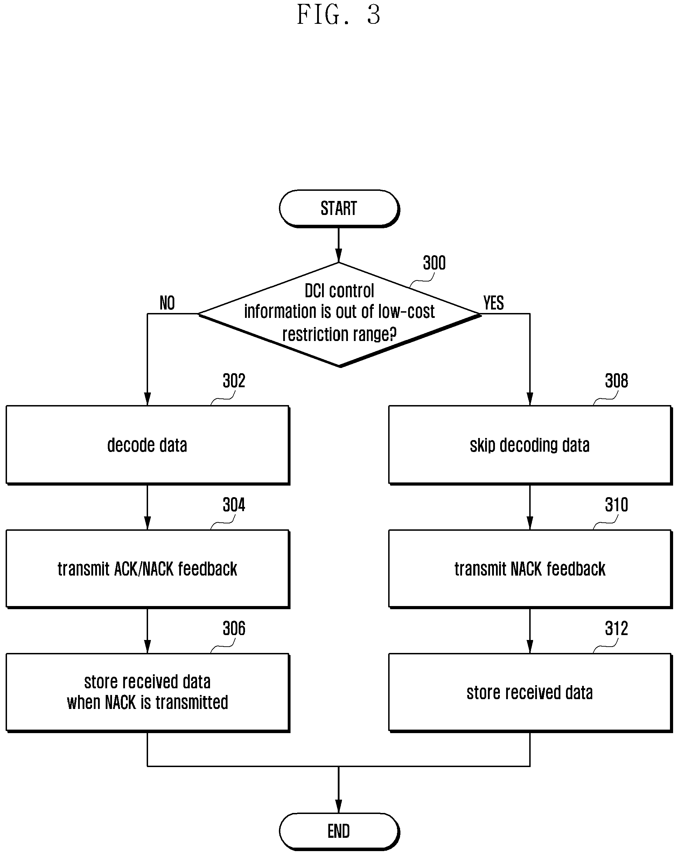

FIG. 3 is a flowchart illustrating a procedure following the TBS determination at the low-cost terminal, according to an embodiment of the present invention.

Referring to FIG. 3, the UE determines whether the DCI is out of a restriction range of the low-cost UE, in step 300. For example, the checked TBS may be greater than the TBS_limit of the UE. If the DCI is not out of the restriction range of the low-cost UE, the UE decodes the data based on the information of the DCI, in step 302. In step 304, if the data is decoded successfully, the UE transmits a HARQ ACK to the eNB, and if the data is not decoded successfully, the UE transmits a HARQ NACK to the eNB. If the feedback is a HARQ NACK, the UE stores the received data for combining with HARQ-retransmitted data, in step 306.

If it is determined, in step 300, that the DCI is out of the restriction range of the low-cost UE, the UE skips decoding the data scheduled by means of the DCI, in step 308. The UE transmits the HARQ NACK to the eNB, in step 310. The UE stores the received data, in step 312.

The procedure of FIG. 3 may be modified such that the determination operation of step 300 is performed only for HARQ initial transmission of the downlink data. For example, if steps 302, 304, and 306 are performed as the result of determination at step 300 for an initial transmission, step 300 may be skipped when the same data is retransmitted, and thus steps 302, 304, and 306 are performed without such a determination. This is possible because the initial transmission and retransmission have an identical TBS. Whether the data is initially-transmitted or retransmitted can be determined based on the NDI information included in the DCI.

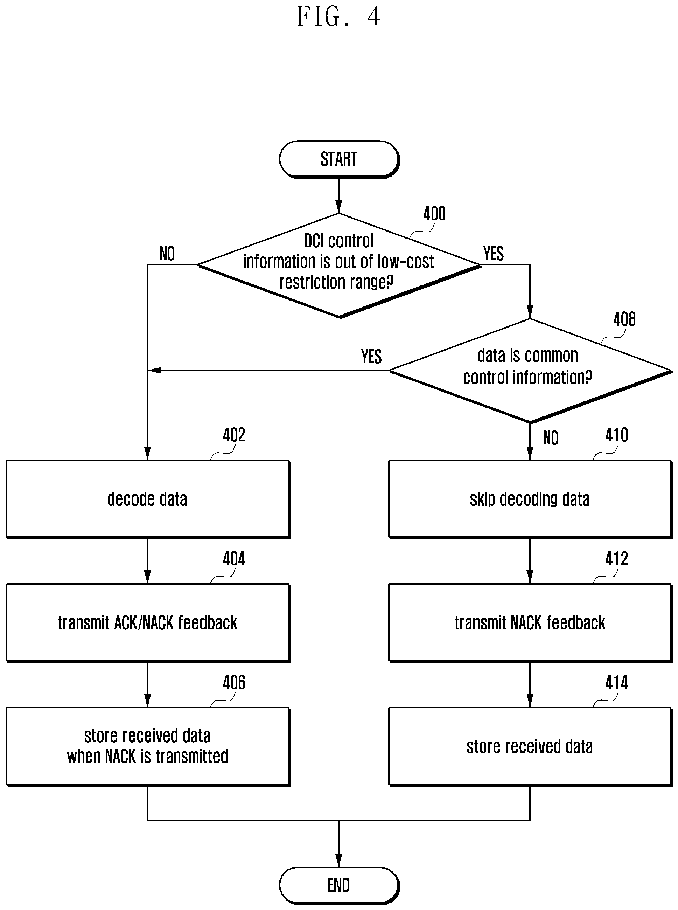

FIG. 4 is a flowchart illustrating a procedure following the TBS determination at the low-cost terminal, according to another embodiment of the present invention.

Referring to FIG. 4, the UE determines whether the DCI is out of the restriction range of the low-cost UE, in step 400. For example, the checked TBS may be greater than the TBS_limit of the UE. If the DCI is not out of the restriction range of the low-cost UE, the UE decodes the data based on the information of the DCI, in step 402. In step 404, the UE transmits a HARQ ACK to the eNB if the data is decoded successfully, and the UE transmits a HARQ NACK to the eNB if the data is not decoded successfully. If the feedback is HARQ NACK, the UE stores the received data for combining with HARQ-retransmitted data, in step 406.

If it is determined, in step 400, that the DCI is out of the restriction range of the low-cost UE, the UE determines whether the scheduled data is common control information, in step 408. If the RNTI determined based on the DCI is one of P-RNTI, SI-RNTI, and RA-RNTI, the UE determines that the scheduled data is common control information. Also, if the resource region to which PDCCH carrying DCI is mapped is a common search space (CSS), the UE determines that scheduled data is common control information.

If it is determined, in step 408, that the scheduled data is common control information, the procedure goes to step 402 and continues as described above. If it is determined that the scheduled data is not common control information, the UE skips decoding the data scheduled by means of the DCI, in step 410. The UE transmits the HARQ NACK to the eNB, in step 412. The UE stores the received data, in step 414. The procedure of FIG. 4 may be modified such that the determination operation of step 400 is performed only for HARQ initial transmission of the downlink data.

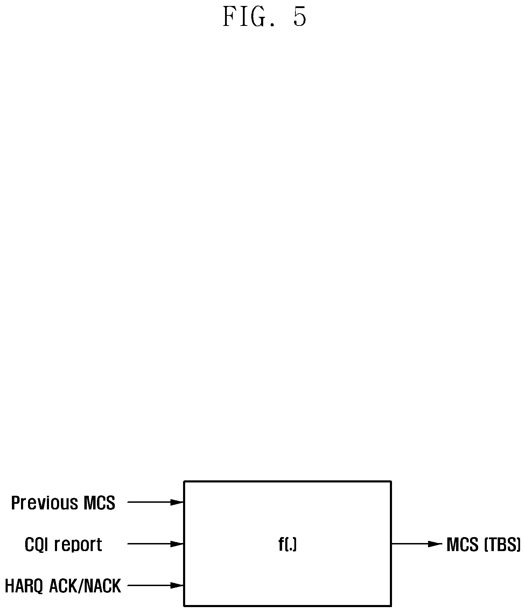

FIG. 5 is a conceptual diagram illustrating the scheduling determination operation of the eNB, according to an embodiment of the present invention.

Referring to FIG. 5, the eNB checks a channel quality indicator (CQI) report and a HARQ ACK/NACK transmitted by the UE for scheduling in consideration of MCS and TBS of the UE. For example, if the UE transmits a CQI report indicating a channel condition and if the eNB receives a HARQ NACK over a predetermined number of times, even though it has scheduled the UE with the MCS corresponding to the CQI report, the eNB sets the MCS for the corresponding UE to a value smaller than that used in the previous scheduling. Thus, although the scheduled data is greater than the TBS_limit due to no awareness of the low-cost UE, the eNB is capable of scheduling data to the low-cost UE within the TBS_limit after the predetermined number of times.

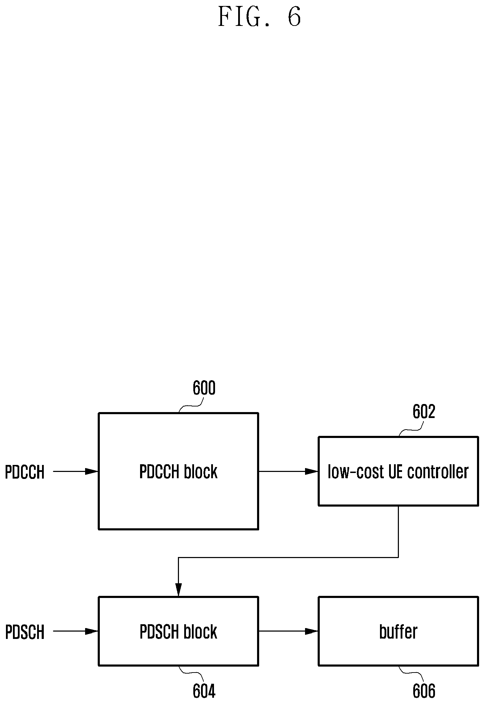

FIG. 6 is a block diagram illustrating a configuration of the receiver of the UE, according to an embodiment of the present invention. The receiver of the UE includes a PDCCH block 600, a low-cost UE controller 602, a PDSCH block 604, and a buffer 606. The PDCCH block 600 is responsible for decoding of PDCCH received from the eNB. The low-cost UE controller determines whether the DCI provided by the PDCCH block 600 is out of the restriction range of the low-cost UE, and controls the PDSCH block 604 based on the determination result. The PDSCH block 604 is responsible for decoding the received PDSCH. As a result of the PDSCH decoding, the decoding failed data is stored in the buffer 606.

Although the UE is depicted in FIG. 6 to have a plurality of function blocks for explanation convenience, it is obvious to those skilled in the art that the UE can be implemented with a controller integrating the PDCCH block 600, the low-cost UE controller 602, the PDSCH block 604, and the buffer 606, along with a communication unit for data communication.

As described above, the data transmission/reception method and apparatus of the low-cost terminal, according to an embodiment of the present invention, is advantageous in that both the low-cost terminal and legacy terminal can operate within one system.

Although the description of the embodiments of the present invention is made of the simplified configuration of the application execution apparatus, it should be noted that the above-described components may be sub-divided or integrated according to the intention of those skilled in the art.

While the invention has been shown and described with reference to certain embodiments thereof, it will be understood by those skilled in the art that various changes in form and detail may be made therein without departing from the scope of the invention as defined by the appended claims.

## Claims

1. A data reception method of a terminal in a mobile communication system, the method comprising:
receiving downlink control information, DCI, from a base station (200);
determining whether a transport block size, TBS, of data which is transmitted by the base station is equal to or less than a predetermined value based on information included in the DCI (300);
if the TBS is equal to or less than the predetermined value, decoding the data (302),
if the TBS is greater than the predetermined value, skipping decoding the data (308) and transmitting a hybrid automatic repeat request, HARQ, negative-acknowledge, NACK, to the base station (310);
wherein a level of a modulation and coding scheme, MCS, to be applied to the data by the base station is decreased if a number of NACK transmission is equal to or greater than a predetermined number and the TBS is greater than the predetermined value.

2. The method of claim 1, further comprising determining, if the TBS is greater than the predetermined value, whether the data includes common control information.

3. The method of claim 2, further comprising decoding, if the data includes the common control information, the data.

4. The method of claim 2, wherein the common control information includes radio network temporary identifier, RNTI, information of type of data determined based on the DCI, the RNTI being one of a paging-RNTI, P-RNTI, a system information-RNTI, SI-RNTI, and a random access-RNTI, RA-RNTI.

5. A terminal for receiving data in a wireless communication system, the terminal comprising:
a communication unit configured to transmit and receive a signal; and
a control unit configured to receive downlink control information, DCI, from a base station, to determine whether a transport block size, TBS, of data which is transmitted by the base station is equal to or less than a predetermined value based on information included in the DCI (300), to decode the data if the TBS is equal to or less than the predetermined value (302), and
to skip decoding the data (308) and to transmit a hybrid automatic repeat request, HARQ, negative-acknowledge, NACK to the base station (310) if the TBS is equal to or less than the predetermined value,
wherein a level of a modulation and coding scheme, MCS, to be applied to the data by the base station is decreased if a number of NACK transmission is equal to or greater than a predetermined number and the TBS is greater than the predetermined value.

6. The terminal of claim 5, wherein the control unit configured to determine, if the TBS is greater than the predetermined value, whether the data includes common control information.

7. The terminal of claim 6, wherein the control unit configured to decode, if the data includes the common control information, the data.

8. The terminal of claim 6, wherein the common control information includes radio network temporary identifier, RNTI, information of type of data determined based on the DCI, the RNTI being one of a paging-RNTI, P-RNTI, a system information-RNTI, SI-RNTI, and a random access-RNTI, RA-RNTI.

9. A data transmission method of a base station in a mobile communication system, the method comprising:
transmitting downlink control information, DCI, to a terminal;
receiving a hybrid automatic repeat request, HARQ, negative-acknowledge, NACK, if a transport block size, TBS, of data which is transmitted to the terminal is greater than a predetermined value;
determining, if the TBS is greater than the predetermined value, whether a number of NACK transmission transmitted by the terminal is equal to or greater than a predetermined number;
decreasing, if the number of NACK transmission is equal to or greater than the predetermined number and the TBS is greater than the predetermined value, a level of a modulation and coding scheme, MCS, to be applied to the data transmitted to the terminal; and transmitting the data to the terminal based on the MCS.

10. A base station for transmitting data in a mobile communication system, the base station comprising:
a communication unit configured to transmit and receive a signal; and
a control unit configured to transmit downlink control information to a terminal, receive a hybrid automatic repeat request, HARQ, negative-acknowledge, NACK, if a transport block size, TBS, of data which is transmitted to the terminal is greater than a predetermined value, determine, if the TBS is greater than the predetermined value, whether a number of NACK transmission is equal to or greater than a predetermined number, decrease, if the number of NACK transmission is equal to or greater than the predetermined number and the TBS is greater than the predetermined value, a level of a modulation and coding scheme, MCS, to be applied to the data transmitted to the terminal, and transmit the data to the terminal based on the MCS.

## Patentansprüche

1. Datenempfangsverfahren eines Endgeräts in einem mobilen Kommunikationssystem, wobei das Verfahren Folgendes umfasst:
Empfangen von Downlink-Steuerinformationen, Downlink Control Information - DCI, von einer Basisstation (200) ;
Bestimmen, ob eine Transportblockgröße, Transport Block Size - TBS, von Daten, die von der Basisstation übertragen werden, gleich oder kleiner als ein vorbestimmter Wert ist, basierend auf Informationen, die in den DCI (300) enthalten sind;
falls die TBS gleich oder kleiner als der vorbestimmte Wert ist, Decodieren der Daten (302),
falls die TBS größer als der vorbestimmte Wert ist, Überspringen des Decodierens der Daten (308) und Übertragen einer negativen Bestätigung, Negative ACKnowledge - NACK, einer hybriden automatischen Wiederholungsanfrage, Hybrid Automatic Repeat Request - HARQ, an die Basisstation (310);
wobei ein Niveau eines Modulations- und Codierschemas, MCS, das von der Basisstation auf die Daten angewendet werden soll, verringert wird, falls eine Anzahl von NACK-Übertragungen gleich oder größer als eine vorbestimmte Anzahl ist und die TBS größer als der vorbestimmte Wert ist.

2. Verfahren nach Anspruch 1, ferner umfassend das Bestimmen, ob die Daten gemeinsame Steuerinformationen aufweisen, falls die TBS größer als der vorbestimmte Wert ist.

3. Verfahren nach Anspruch 2, ferner umfassend das Decodieren der Daten, falls die Daten die gemeinsamen Steuerinformationen aufweisen.

4. Verfahren nach Anspruch 2, wobei die gemeinsamen Steuerinformationen temporäre Funknetzkennungs, Radio Network Temporary Identifier - RNTI, -Informationen von einem Datentyp aufweisen, der basierend auf den DCI bestimmt wird, wobei die RNTI eine von Paging-RNTI, P-RNTI, von Systeminformations-RNTI, SI-RNTI, und Random-Access-RNTI, RA-RNTI sind.

5. Endgerät zum Empfangen von Daten in einem drahtlosen Kommunikationssystem, wobei das Endgerät Folgendes umfasst:
eine Kommunikationseinheit, die konfiguriert ist, ein Signal zu übertragen und zu empfangen; und
eine Steuereinheit, die zum Empfangen von Downlink-Steuerinformationen, DCI, von einer Basisstation konfiguriert ist, um zu bestimmen, ob eine Transportblockgröße, TBS, von Daten, die von der Basisstation übertragen werden, gleich oder kleiner als ein vorbestimmter Wert basierend auf Informationen ist, die in den DCI (300) enthalten sind, um die Daten zu decodieren, falls der TBS gleich oder kleiner als der vorbestimmte Wert (302) ist, und
das Decodieren der Daten (308) zu überspringen und eine negative Bestätigung, Negative-ACKknowledge NACK, einer hybriden automatischen Wiederholungsanfrage, Hybrid Automatic Repeat Request - HARQ, an die Basisstation (310) zu übertragen, falls die TBS gleich oder kleiner als der vorbestimmte Wert ist,
wobei ein Niveau eines Modulations- und Codierschemas, MCS, das von der Basisstation auf die Daten angewendet werden soll, verringert wird, falls eine Anzahl von NACK-Übertragungen gleich oder größer als eine vorbestimmte Anzahl ist und die TBS größer als der vorbestimmte Wert ist.

6. Endgerät nach Anspruch 5, wobei die Steuereinheit konfiguriert ist, zu bestimmen, ob die Daten gemeinsame Steuerinformationen aufweisen, falls die TBS größer als der vorbestimmte Wert ist.

7. Endgerät nach Anspruch 6, wobei die Steuereinheit konfiguriert ist, die Daten zu decodieren, falls die Daten die gemeinsamen Steuerinformationen aufweisen.

8. Endgerät nach Anspruch 6, wobei die gemeinsamen Steuerinformationen temporäre Funknetzkennungs, Radio Network Temporary Identifier, RNTI, -Informationen von einem Datentyp aufweisen, der basierend auf den DCI bestimmt wird, wobei die RNTI eine von Paging-RNTI, P-RNTI, von Systeminformations-RNTI, SI-RNTI, und Random-Access-RNTI, RA-RNTI sind.

9. Datenübertragungsverfahren einer Basisstation eines mobilen Kommunikationssystems, wobei das Verfahren Folgendes umfasst:
Übertragen von Downlink-Steuerinformationen, DCI, an ein Endgerät;
Empfangen einer negativen Bestätigung, Negative-ACKknowledge - NACK, einer hybriden automatischen Wiederholungsanfrage, Hybrid Automatic Repeat Request - HARQ, falls eine Transportblockgröße, TBS, von Daten, die an das Endgerät übertragen werden, größer als ein vorbestimmter Wert ist;
Bestimmen, falls die TBS größer als der vorbestimmte Wert ist, ob eine Anzahl von NACK-Übertragungen, die von dem Endgerät übertragen werden, gleich oder größer als eine vorbestimmte Anzahl ist;
Verringern, falls die Anzahl der NACK-Übertragungen gleich oder größer als die vorbestimmte Anzahl ist und die TBS größer als der vorbestimmte Wert ist, eines Niveaus eines Modulations- und Codierschemas, MCS, das auf Daten angewendet werden soll, die an das Endgerät übertragenen werden; und
Übertragen der Daten an das Endgerät basierend auf dem MCS.

10. Basisstation zum Übertragen von Daten in einem mobilen Kommunikationssystem, wobei die Basisstation Folgendes umfasst:
eine Kommunikationseinheit, die konfiguriert ist, ein Signal zu übertragen und zu empfangen; und
eine Steuereinheit, die konfiguriert ist, Downlink-Steuerinformationen an ein Endgerät zu übertragen, eine negative Bestätigung, Negative-ACKknowledge - NACK, einer hybriden automatischen Wiederholungsanfrage, Hybrid Automatic Repeat Request - HARQ, zu empfangen, falls eine Transportblockgröße, TBS, von Daten, die an das Endgerät übertragen werden, größer als ein vorbestimmter Wert ist, zu bestimmen, falls die TBS größer als der vorbestimmte Wert ist, ob eine Anzahl von NACK-Übertragungen gleich oder größer als eine vorbestimmte Anzahl ist, falls die Anzahl von NACK-Übertragungen gleich oder größer als die vorbestimmte Anzahl ist und die TBS größer als der vorbestimmte Wert ist, ein Niveau eines Modulations- und Codierschemas, MCS, das auf die an das Endgerät übertragenen Daten angewendet werden soll, zu verringern und die Daten an das Endgerät basierend auf dem MCS zu übertragen.

## Revendications

1. Procédé de réception de données d'un terminal dans un système de communication mobile, le procédé comprenant de :
recevoir une information de commande en liaison descendante, DCI, provenant d'une station de base (200) ;
déterminer si une taille de bloc de transport, TBS, des données qui sont transmises par la station de base est égale ou inférieure à une valeur prédéterminée sur la base de l'information incluse dans la DCI (300) ;
si la TBS est égale ou inférieure à la valeur prédéterminée, décoder les données (302),
si la TBS est supérieure à la valeur prédéterminée, omettre de décoder les données (308) et transmettre un accusé de réception négatif, NACK, de demande de répétition automatique hybride, HARQ, à la station de base (310) ;
dans lequel un niveau d'un mécanisme de modulation et codage, MCS, à appliquer aux données par la station de base est diminué si un nombre de transmissions NACK est égal ou supérieur à un nombre prédéterminé et la TBS est supérieure à la valeur prédéterminée.

2. Procédé selon la revendication 1, comprenant en outre de déterminer, si la TBS est supérieure à la valeur prédéterminée, si les données incluent une information de commande commune.

3. Procédé selon la revendication 2, comprenant en outre de décoder, si les données incluent l'information de commande commune, les données.

4. Procédé selon la revendication 2, dans lequel l'information de commande commune inclut une information du type de données déterminées sur la base de la DCI d'identifiant temporaire de réseau radio, RNTI, le RNTI étant un d'un RNTI de radiorecherche, P-RNTI, un RNTI d'information de système, SI-RNTI, et un RNTI d'accès aléatoire, RA-RNTI.

5. Terminal pour la réception de données dans un système de communication sans fil, le terminal comprenant :
une unité de communication configurée pour transmettre et recevoir un signal ; et
une unité de commande configurée pour recevoir une information de commande de liaison descendante DCI provenant d'une station de base, afin de déterminer si une taille de bloc de transport, TBS, des données qui sont transmises par la station de base est égale ou inférieure à une valeur prédéterminée sur la base d'une information incluse dans la DCI (300), décoder les données si la TBS est égale ou inférieure à la valeur prédéterminée (302) et omettre de décoder les données (308) et transmettre un accusé de réception négatif, NACK, de demande de répétition automatique hybride, HARQ, à la station de base (310) si la TBS est égale ou inférieure à la valeur prédéterminée,
dans lequel un niveau d'un mécanisme de modulation et codage MCS à appliquer aux données par la station de base est diminue si un nombre de transmissions NACK est égal ou supérieur à un nombre prédéterminé et la TBS est supérieure à la valeur prédéterminée.

6. Terminal selon la revendication 5, dans lequel l'unité de commande est configurée pour déterminer, si la TBS est supérieure à la valeur prédéterminée, si les données incluent une information de commande commune.

7. Terminal selon la revendication 6, dans lequel l'unité de commande est configurée pour décoder, si les données incluent une information de commande commune, les données.

8. Terminal selon la revendication 6, dans lequel l'information de commande commune inclut une information du type de données déterminées sur la base de la DCI d'identifiant temporaire de réseau radio, RNTI, le RNTI étant un d'un RNTI de radiorecherche, P-RNTI, un RNTI d'information de système, SI-RNTI, et un RNTI d'accès aléatoire, RA-RNTI.

9. Procédé de transmission de données d'une station de base dans un système de communication mobile, le procédé comprenant de :
transmettre une information de commande de liaison descendante DCI à un terminal ;
recevoir un accusé de réception négatif NACK de demande de répétition automatique hybride HARQ, si une taille de bloc de transport, TBS, des données qui sont transmises vers le terminal est supérieure à une valeur prédéterminée ;
déterminer, si la TBS est supérieure à la valeur prédéterminée, si un nombre de transmissions NACK transmises par le terminal est égal ou supérieur à un nombre prédéterminé ;
diminuer, si le nombre de transmissions NACK est égal ou supérieur au nombre prédéterminé et la TBS est supérieure à la valeur prédéterminée, un niveau d'un mécanisme de modulation et codage, MCS, à appliquer aux données transmises au terminal ; et
transmettre les données au terminal sur la base du MCS.

10. Station de base pour transmettre des données dans un système de communication mobile, la station de base comprenant :
une unité de communication configurée pour transmettre et recevoir un signal; et
une unité de commande configurée pour transmettre une information de commande en liaison descendante vers un terminal, recevoir un accusé de réception négatif NACK d'une demande de répétition automatique hybride HARQ, si une taille de bloc de transport TBS des données qui sont transmises vers le terminal est supérieure à une valeur prédéterminée, déterminer, si la TBS est supérieure à la valeur déterminée, si un nombre de transmissions NACK est égal ou supérieur à un nombre prédéterminé, diminuer, si le nombre de transmissions NACK est égal ou supérieur au nombre prédéterminé et la TBS est supérieure à la valeur prédéterminée, un niveau d'un mécanisme de modulation et codage MCS à appliquer aux données transmises au terminal et transmettre les données vers le terminal sur la base du MCS.
